# EUROPEAN PATENT APPLICATION

(11) **EP 4 383 169 A1**
(43) Date of publication of application: **12.06.2024**
(21) Application number: 23191855.8
(22) Date of filing: 17.08.2023
(51) Int. Cl.: G06Q 20/20, G07G 1/00, G07G 1/01, G07G 1/14

(54) **POINT-OF-SALE SYSTEM, TRANSACTION PROCESSING TERMINAL, AND INFORMATION PROCESSING METHOD**

(30) Priority: 06.12.2022 JP 2022195022
(71) Applicant: Toshiba Tec Kabushiki Kaisha, Shinagawa-ku Tokyo 141-8562 (JP)
(72) Inventor: Oe, Ryosuke, Tokyo 141-8562 (JP)
(74) Representative: Bandpay & Greuter

(57) **Abstract**

According to one embodiment, a point-of-sale system has a server connectable to a plurality of point-of-sale terminals. The server includes a storage unit configured to store transaction information of the plurality of point-of-sale terminals and a processor. The processor is configured to acquire, from a first terminal in the plurality of point-of-sale terminals, a designation of a second terminal in the plurality of point-of-sale terminals, and output transaction information of the second terminal from the storage unit to the first terminal to permit the first terminal to continue a transaction started by the second terminal.

## Description

### FIELD

Embodiments of the present disclosure relate to a point-of-sale system and transaction processing terminals and information processing methods for such systems.

### BACKGROUND

In recent years, use of tablet point of sales (POS) type terminals is increasing in commercial facilities such as supermarkets and restaurants.

In the tablet POS, when a battery shortage, a failure, or the like of the tablet terminal occurs in the middle of a transaction, the processing of the transaction may not be simply continued using another available terminal.

Therefore, there is a demand for a technology solution for permitting an on-going transaction to be completed seamlessly at another terminal when the operation of the initial tablet terminal becomes abnormal.

To this end, a point-of-sale system and a point-of-sale terminal according to appended claims are provided.

### BRIEF DESCRIPTION OF THE DRAWINGS

FIG. 1 is a block diagram illustrating a POS system according to an embodiment.
FIG. 2 is a schematic diagram illustrating an example of a commodity registration image displayed on a first information processing terminal according to an embodiment.
FIG. 3 is a schematic diagram illustrating an example of a business menu image.
FIG. 4 is a schematic diagram illustrating another example of a business menu image.
FIG. 5 is a schematic diagram illustrating an example of a takeover target terminal display image.
FIG. 6 is a schematic diagram illustrating an example of a terminal information display image.
FIG. 7 is a schematic diagram illustrating an example of a takeover selection image.
FIG. 8 is a flowchart processing performed by a server according to an embodiment.
FIG. 9 is a flowchart of a takeover process performed by a server according to an embodiment.
FIG. 10 is a flowchart of a takeover process performed by a first information processing terminal according to an embodiment.
FIG. 11 is a schematic diagram illustrating an example of the business menu image.
FIG. 12 is a schematic diagram illustrating an example of a holding confirmation image.
FIG. 13 is a schematic diagram illustrating an example of a business menu image.
FIG. 14 is a schematic diagram illustrating another example of a business menu image.
FIG. 15 is a flowchart of a holding process performed by a server according to an embodiment.
FIG. 16 is a flowchart of a holding process performed by a first information processing terminal according to an embodiment.
FIG. 17 is a flowchart of a peripheral device connection process performed by a second information processing terminal according to an embodiment.

### DETAILED DESCRIPTION

An embodiment of the present disclosure provides a technological solution permitting a continuing of a transaction process started at one a terminal on another terminal when the first terminal becomes abnormal in some respect.

According to one embodiment, a point-of-sale system includes a server connectable to a plurality of point-of-sale terminals. The server includes a storage unit configured to store transaction information of the plurality of point-of-sale terminals and a processor. The processor is configured to acquire, from a first terminal in the plurality of point-of-sale terminals, a designation of a second terminal in the plurality of point-of-sale terminals, and output transaction information of the second terminal from the storage unit to the first terminal to permit the first terminal to continue a transaction started by the second terminal.

Hereinafter, an embodiment will be described with reference to the drawings. In the drawings, the same components are, in general, denoted by the same reference numerals, and redundant description of repeated aspects may be omitted.

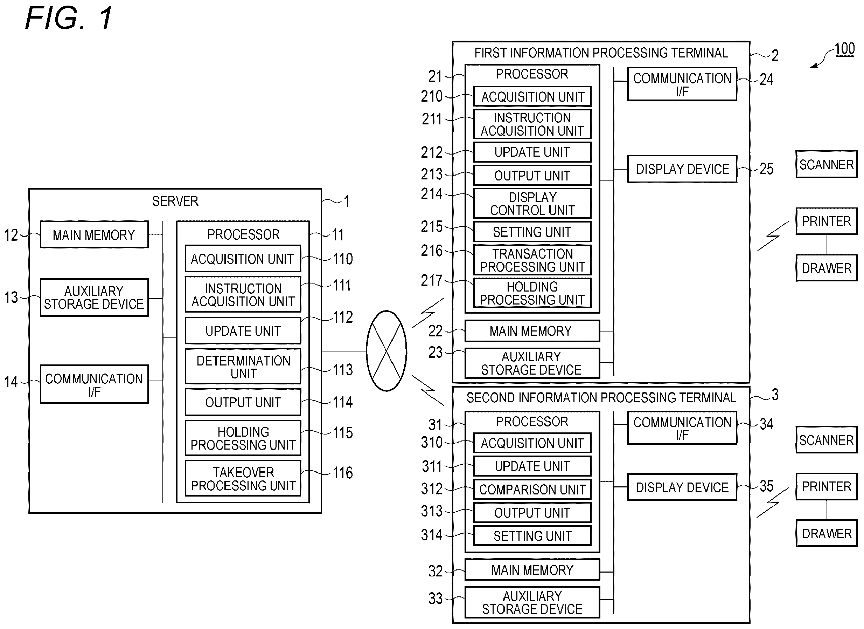

FIG. 1 is a block diagram illustrating a POS system 100 according to the embodiment.

The POS system 100 includes a server 1, a first information processing terminal 2, and a second information processing terminal 3. The server 1, the first information processing terminal 2, and the second information processing terminal 3 are communicably connected to each other via a network. For example, the network is implemented by one or more networks selected from among various networks such as the Internet, a mobile communication network, and a local area network (LAN). The one or more networks may include a wireless network or a wired network. In some examples, POS system 100 may have more than one server 1, more than one first information processing terminal 2, and more than one second information processing terminal 3 and the depicted server 1, first information processing terminal 2, and second information processing terminal 3 should be considered representative of a plurality of such elements.

The server 1 is an electronic device that collects data and processes the collected data. The server 1 is communicably connected to the first information processing terminal 2 and the second information processing terminal 3 via the network. The first information processing terminal 2 and the second information processing terminal 3 may be used by the same or different users in the same store. The server 1 receives various data from the first information processing terminal 2 and the second information processing terminal 3, and outputs various data to the first information processing terminal 2 and the second information processing terminal 3. The server 1 is one example of an information processing device.

The first information processing terminal 2 is an electronic device capable of communicating with another electronic device. The first information processing terminal 2 is, for example, a device used by a store clerk. In some examples, the first information processing terminal 2 can be a tablet terminal, a smartphone, or a personal computer (PC). The store clerk may be referred to as a user or a person in certain contexts. The first information processing terminal 2 can be referred to as a takeover processing terminal 2 that takes over a process such as a transaction process from another electronic device and performs the remaining processing or the like. A takeover of a transaction process is also referred to as a takeover process. In this context, a takeover process refers to a transaction process that started on another terminal being handed off (taken over) to another terminal for completion of the transaction. For example, when the terminal at which the transaction was started malfunctions (or the battery runs out), the transaction can be taken over by another terminal. In a takeover process another information processing terminal may utilize connection settings for connection to a peripheral device established for the initial terminal before the initial terminal malfunctioned (entered an abnormal state). An abnormal state in this context includes any state in which the transaction process cannot be performed at the information processing terminal due to any cause, such as a battery power shortage, a hardware failure, software errors or the like. A takeover process may involve taking over only the transaction processing, taking over the transaction processing and peripheral device connection settings, or taking over just the peripheral device connection settings. In the following, a "takeover process" refers to a take over at least one of an on-going transaction processing or peripheral device connection settings. The first information processing terminal 2 can be referred to as a first terminal.

The second information processing terminal 3 is an electronic device capable of communicating with another electronic device. The second information processing terminal 3 is, for example, a device used by a store clerk. In some examples, the second information processing terminal 3 is a tablet terminal, a smartphone, or a PC. The second information processing terminal 3 is also referred to as a takeover target terminal 3 from which a process is taken over by another electronic device. The second information processing terminal 3 can be referred to as a second terminal.

In the following, "information processing terminal", may refer to either one or both of the first information processing terminal 2 and the second information processing terminal 3.

The server 1 is an electronic device including a processor 11, a main memory 12, an auxiliary storage device 13, and a communication interface 14. The units constituting the server 1 are connected to each other such that signals can be input and output. In FIG. 1, interface is labeled as "I/F".

The processor 11 corresponds to a central part of the server 1. For example, the processor 11 is a central processing unit (CPU), but is not limited thereto. The processor 11 may include various circuits. The processor 11 loads, in the main memory 12, a program stored in advance in the main memory 12 or the auxiliary storage device 13. The program is a software program or the like that causes the processor 11 to implement each function of the units of the server 1. The processor 11 executes various operations by executing the program loaded in the main memory 12.

The main memory 12 corresponds to a main storage part of the server 1. The main memory 12 includes a nonvolatile memory area and a volatile memory area. The main memory 12 stores an operating system and/or a program in the nonvolatile memory area. The main memory 12 uses the volatile memory area as a work area in which data is appropriately rewritten by the processor 11. For example, the main memory 12 includes a read only memory (ROM) as the nonvolatile memory area. For example, the main memory 12 includes a random access memory (RAM) as the volatile memory area. The main memory 12 stores the program.

The auxiliary storage device 13 corresponds to an auxiliary storage part of the server 1. The auxiliary storage device 13 is an element constituting the computer of the server 1. The auxiliary storage device 13 is an electric erasable programmable read-only memory (EEPROM^{®}), a hard disc drive (HDD), a solid-state drive (SSD), or the like. The auxiliary storage device 13 stores the above-described program, data used when the processor 11 performs various processes, and data generated by the processor 11. The auxiliary storage device 13 is an example of a storage unit.

The auxiliary storage device 13 stores terminal information about one or more information processing terminals. The terminal information includes a company code, a store code, a terminal code, and peripheral device information. The company code is unique identification information assigned to different types of companies in order to classify each company. The type of company can be, for example, a restaurant, a clothing shop, and a supermarket. The store code is unique identification information assigned to each store in order to individually identify the store. The terminal code is unique identification information assigned to each information processing terminal in order to individually identify the information processing terminal. The peripheral device information is information about a peripheral device connected to each information processing terminal. Examples of the peripheral devices include a scanner, a printer, and a drawer. The information about the peripheral device includes information related to the connection setting. The peripheral device may be connected to the information processing terminal via a network. Examples of the network include a local area network (LAN), Bluetooth^{®}, and Wi-Fi.

The auxiliary storage device 13 stores transaction information from one or more information processing terminals. In this context, transaction information is information related to a transaction process at each respective information processing terminal. The transaction information includes as a part thereof a company code, a store code, a terminal code, a transaction code, a transaction status, and transaction detail information. The transaction code is unique identification information assigned to each transaction. The transaction status indicates a state of a transaction. The state of the transaction may be, for example, "shopping," "paying," and "leaving store." The shopping state indicates the information processing terminal is performing a commodity registration process. The paying state indicates the information processing terminal is performing a payment process. The leaving store state indicates the information processing terminal ended the transaction processing. The transaction detail information includes such things registered commodity information, payment process information, or the like. The registered commodity information includes commodity identification information, the quantity of commodities being purchased, a price of the commodities, or the like. The commodity identification information is unique identification information assigned to each commodity in order to individually identify the commodity. The payment process information is detailed information related to the payment process such as payment method selection and the like.

The communication interface 14 includes various interfaces that communicably connect the server 1 to other electronic devices via a network according to a predetermined communication protocol.

A hardware configuration of the server 1 is not limited to the above-described configuration. In the server 1, the above-described components can be appropriately omitted and changed, and a new component can be appropriately added.

Functions implemented by the above-described processor 11 will be described.

The processor 11 implements an acquisition unit 110, an instruction acquisition unit 111, an update unit 112, a determination unit 113, an output unit 114, a holding processing unit 115, and a takeover processing unit 116. These units implemented by the processor 11 can also be considered as functions. The units implemented by the processor 11 can also be said to be implemented by a control unit including the processor 11 and the main memory 12.

The acquisition unit 110 acquires a store clerk code from an information processing terminal via the communication interface 14. The acquisition unit 110 may acquire the store clerk code based on a log-in of the store clerk at an information processing terminal.

The acquisition unit 110 acquires terminal information from one or more information processing terminals via the communication interface 14. The acquisition unit 110 may acquire each piece of the terminal information at a one time or separately. The acquisition unit 110 may acquire the terminal information from the one or more information processing terminals each time the terminal information is updated. The acquisition unit 110 acquires transaction information from one or more information processing terminals via the communication interface 14. The acquisition unit 110 may acquire the transaction information from the information processing terminal(s) each time transaction information is updated.

The acquisition unit 110 acquires, via the communication interface 14, information related to candidates for the takeover target terminal 3 selected from one or more information processing terminals. The information related to the candidates of the takeover target terminal 3 includes at least one of terminal information and transaction information of the candidates of the takeover target terminal 3. The candidates include any information processing terminal having the same company code and store code. The candidates for takeover can be selected based on input of the company code and the store code at a takeover processing terminal 2.

The acquisition unit 110 acquires identification information for the takeover processing terminal 2 via the communication interface 14. The identification information for the takeover processing terminal 2 is, for example, a terminal code or any other information identifying the takeover processing terminal 2.

The acquisition unit 110 acquires, from the takeover processing terminal 2, information related to a takeover target terminal 3 selected from the candidates at the takeover processing terminal 2. The information related to the takeover target terminal 3 is, for example, a terminal code of the takeover target terminal 3. The acquisition unit 110 may acquire, from the takeover processing terminal 2, the information related to the takeover target terminal 3 based on a selection instruction from the takeover processing terminal 2.

The instruction acquisition unit 111 acquires various instructions from an information processing terminal via the communication interface 14. The instruction acquisition unit 111 acquires, from the takeover processing terminal 2, a takeover instruction for performing a takeover process. The instruction acquisition unit 111 acquires, from the takeover processing terminal 2, a selection instruction for specifying a particular takeover target terminal 3.

The update unit 112 updates the terminal information each time the terminal information is acquired by the acquisition unit 110. The update unit 112 updates the transaction information each time the transaction information is acquired by the acquisition unit 110.

In response to the acquisition of the store clerk code from an information processing terminal, the determination unit 113 determines whether the store clerk code is usable and performs an authentication process.

In response to the acquisition of the terminal information from an information processing terminal, the determination unit 113 determines whether the information processing terminal can be identified by terminal code. When the information processing terminal can be identified by the terminal code, the determination unit 113 performs an authentication process.

In response to the acquisition of terminal information after recovery from the takeover target terminal 3, the determination unit 113 may determine whether a peripheral device is usable. A peripheral device may be considered usable when the peripheral device is not connected to another information processing terminal.

The output unit 114 outputs a determination result of the determination unit 113 to the information processing terminal via the communication interface 14. The determination result can be an authentication completion notification indicating that authentication is completed, an error notification indicating that authentication is not possible, or the like.

The output unit 114 outputs, to the takeover processing terminal 2 via the communication interface 14, the information related to the candidates for a takeover target terminal 3. Such information can be stored in the auxiliary storage device 13.

The output unit 114 outputs, to the takeover processing terminal 2 via the communication interface 14, information associated with the takeover processing terminal 2 after a takeover process is initiated. The takeover process includes enabling the terminal information and the transaction information from the takeover target terminal 3 to be used by the takeover processing terminal 2. The takeover process includes updating the terminal information and the transaction information to reflect the takeover by takeover processing terminal 2. The enabling and updating of transaction information in this context includes, for example, adding the terminal information and the transaction information of the takeover target terminal 3 to the terminal information and the transaction information now associated with the takeover processing terminal 2. The enabling may include changing the terminal information and the transaction information associated with the takeover processing terminal 2.

The information associated with the takeover processing terminal 2 after the takeover process includes the terminal information and the transaction information of the takeover processing terminal 2 after the takeover process. The terminal information of the takeover processing terminal 2 after the takeover process includes peripheral device information based on the setting of the peripheral device in the takeover target terminal 3. The transaction information of the takeover processing terminal 2 after the takeover process includes transaction information based on the transaction processing at the takeover target terminal 3 before takeover. The information associated with the takeover processing terminal 2 after the takeover process started is also referred to as updated terminal information and transaction information. The information associated with the takeover processing terminal 2 after the takeover process is also referred to as available transaction information and terminal information.

The takeover process may include updating the terminal information and the transaction information for the takeover target terminal 3 based on the updating of the terminal information and the transaction information for the takeover processing terminal 2. The updating of the terminal information for the takeover target terminal 3 may include deleting or changing the peripheral device information set for the takeover target terminal 3. The updating of the transaction information for the takeover target terminal 3 may include deleting or changing the transaction information stored in the takeover target terminal 3.

The output unit 114 outputs, to the takeover processing terminal 2, peripheral device information based on the setting of the peripheral device in the takeover target terminal 3 and stored in the auxiliary storage device 13, based on the selection of the takeover target terminal 3 in the takeover processing terminal 2. The peripheral device information includes information related to the connection setting with the peripheral device.

When the abnormal state of the takeover target terminal 3 is eliminated (e.g., previous malfunction/error is cleared), the output unit 114 outputs, to the takeover target terminal 3, the peripheral device information associated with the takeover target terminal 3 and stored in the auxiliary storage device 13. The peripheral device information associated with the takeover target terminal 3 is the peripheral device information associated with the takeover target terminal 3 after the takeover process.

The holding processing unit 115 determines whether the transaction status of the takeover processing terminal 2 is "during transaction" based on the transaction information of the takeover processing terminal 2 stored in the auxiliary storage device 13. The holding processing unit 115 performs a holding process when the transaction status of the takeover processing terminal 2 is "during transaction". A holding process in this context means to hold (pause) the transaction processing at the takeover processing terminal 2 or setting of a holding flag in the transaction information.

The holding processing unit 115 determines whether the transaction process has been completed based on the transaction information acquired from the takeover processing terminal 2. The holding processing unit 115 may determine whether the transaction process has been completed based on a completion instruction acquired from the takeover processing terminal 2. The completion instruction (indicating the completion of the transaction) can be, for example, a user selection instruction such as a pressing of a transaction completion button (displayed on a display device 25 of the takeover processing terminal 2) or a pressing of a transaction call button (displayed on the display device 25 of the takeover processing terminal 2).

When the transaction process of the takeover target terminal 3 is completed by the takeover processing terminal 2, the holding processing unit 115 outputs, to the takeover processing terminal 2, the transaction information based on the held transaction process. The holding processing unit 115 may output, to the takeover processing terminal 2, the transaction information upon the completion of the transaction.

The takeover processing unit 116 performs a takeover process based on the information related to the takeover target terminal 3 acquired by the acquisition unit 110. The takeover processing unit 116 enables the transaction information, which is based on the transaction processing at the takeover target terminal 3 and stored in the auxiliary storage device 13, to be used by the takeover processing terminal 2. The takeover processing unit 116 may add the transaction information from the takeover target terminal 3 stored in the auxiliary storage device 13 to the transaction information associated with the takeover processing terminal 2. The takeover processing unit 116 may update and change the transaction information associated with the takeover processing terminal 2 to incorporate the transaction information from the takeover target terminal 3.

A configuration example of the first information processing terminal 2 will be described.

The first information processing terminal 2 is an electronic device including a processor 21, a main memory 22, an auxiliary storage device 23, a communication interface 24, and the display device 25. The units constituting the first information processing terminal 2 are connected to each other such that signals can be input and output.

The processor 21 corresponds to a central part of the first information processing terminal 2. The processor 21 has a hardware configuration similar to that of the processor 11 described above. The processor 21 executes various operations by executing a program stored in the main memory 22 or the auxiliary storage device 23.

The main memory 22 corresponds to a main storage part of the first information processing terminal 2. The main memory 22 has a hardware configuration similar to that of the main memory 12 described above. The main memory 22 can store a program.

The auxiliary storage device 23 corresponds to an auxiliary storage part of the first information processing terminal 2. The auxiliary storage device 23 has a hardware configuration similar to that of the auxiliary storage device 13 described above. The auxiliary storage device 23 can store a program.

The auxiliary storage device 23 stores terminal information and transaction information of the first information processing terminal 2. The auxiliary storage device 23 may store information about a user of the first information processing terminal 2. The information about the user can be a store clerk code.

The communication interface 24 includes various interfaces that communicably connect the first information processing terminal 2 to other devices via a network according to a communication protocol. The first information processing terminal 2 is connectable to peripheral devices via the communication interface 24.

The display device 25 is capable of displaying various images under the control of the processor 21. For example, the display device 25 is a liquid crystal display or an electroluminescence (EL) display.

The hardware configuration of the first information processing terminal 2 is not limited to the above-described configuration. In the first information processing terminal 2, the above-described components can be appropriately omitted and changed, and a new component can be appropriately added.

Certain functions implemented by processor 21 will be described.

The processor 21 implements an acquisition unit 210, an instruction acquisition unit 211, an update unit 212, an output unit 213, a display control unit 214, a setting unit 215, a transaction processing unit 216, and a holding processing unit 217. The units implemented by the processor 21 can also be considered functions. The units implemented by the processor 21 can also be said to be implemented by a control unit including the processor 21 and the main memory 22.

The acquisition unit 210 acquires a result of an authentication process via the communication interface 24. The acquisition unit 210 acquires the result of the authentication process based on the store clerk code. The acquisition unit 210 acquires the result of the authentication process based on the terminal information.

The acquisition unit 210 acquires terminal information of other information processing terminals from the server 1 via the communication interface 24. The acquisition unit 210 acquires transaction information of one or more information processing terminals from the server 1 via the communication interface 24.

The acquisition unit 210 acquires terminal information of takeover target terminal candidates from the server 1 via the communication interface 24. The acquisition unit 210 acquires transaction information of the takeover target terminal candidates from the server 1 via the communication interface 24.

The acquisition unit 210 acquires, from the server 1 via the communication interface 24, terminal information associated with the takeover processing terminal 2 after a takeover process. The acquisition unit 210 acquires, from the server 1 via the communication interface 24, transaction information associated with the takeover processing terminal 2 after the takeover process.

The instruction acquisition unit 211 acquires various instructions input by the user. The instruction acquisition unit 211 acquires a takeover instruction (request) for performing the takeover process. The instruction acquisition unit 111 acquires a selection instruction for selecting the takeover target terminal 3.

The update unit 212 updates the terminal information stored in the auxiliary storage device 23 every time the terminal information is acquired. The update unit 212 updates the transaction information stored in the auxiliary storage device 23 every time the transaction information is acquired.

The output unit 213 outputs the store clerk code input by the user to the server 1 via the communication interface 24.

The output unit 213 outputs the takeover instruction input by the user to the server 1 via the communication interface 24.

The output unit 213 outputs the identification information of the takeover processing terminal 2 to the server 1 via the communication interface 24. The output unit 213 may output the terminal information of the takeover processing terminal 2 as the identification information of the takeover processing terminal 2. The output unit 213 may output the terminal code of the takeover processing terminal 2 as the identification information of the takeover processing terminal 2.

The output unit 213 outputs the information related to the takeover target terminal 3 to the server 1 via the communication interface 24 based on the selection of the takeover target terminal 3 by the user. The output unit 213 may output the information related to the takeover target terminal 3 to the server 1 based on the selection instruction input by the user. The information related to the takeover target terminal 3 indicates identification information that can identify the takeover target terminal 3. The information related to the takeover target terminal 3 includes at least one of the terminal code and the transaction code of the takeover target terminal 3.

The output unit 213 outputs the peripheral device information of the takeover processing terminal 2 to the server 1 via the communication interface 24. The output unit 213 may output the peripheral device information to the server 1 based on the fact that the takeover processing terminal 2 is connected to peripheral devices.

The output unit 213 outputs the transaction information to the server 1 via the communication interface 24. The output unit 213 may output the transaction information to the server 1 each time the transaction information is updated.

The display control unit 214 causes the display device 25 to display an authentication completion notification based on an authentication result acquired by the acquisition unit 210. The display control unit 214 causes the display device 25 to display an error notification based on the authentication result acquired by the acquisition unit 210.

The display control unit 214 causes the display device 25 to display information about candidates for the takeover target terminal 3 acquired by the acquisition unit 210. The display control unit 214 causes the display device 25 to display terminal information about the candidates for the takeover target terminal 3 when acquired by the acquisition unit 210. The display control unit 214 causes the display device 25 to display transaction information of the candidates. The display control unit 214 causes the display device 25 to display a transaction status of the candidates. The display control unit 214 causes the display device 25 to display transaction detail information of the candidates.

The display control unit 214 causes the display device 25 to display a selection button for allowing the user to input various instructions. A selection button can be, for example, a selection button for selecting the takeover target terminal 3. A selection button can be, for example, a transaction completion button indicating that the takeover process is completed. The selection button can be, for example, a transaction call button for calling transaction information of a held transaction.

The setting unit 215 sets the peripheral devices connected to the first information processing terminal 2. The setting unit 215 can set connection settings for the peripheral devices for the takeover processing terminal 2 based on terminal information of the takeover target terminal 3 acquired by the acquisition unit 210. The setting unit 215 may also or instead connect the takeover processing terminal 2 to the peripheral devices indicated by the peripheral device information of the takeover target terminal 3. The setting unit 215 compares the peripheral device information stored in the auxiliary storage device 23 with the peripheral device information of the takeover target terminal 3. When the peripheral device information stored in the auxiliary storage device 23 is different from the peripheral device information of the takeover target terminal 3, the setting unit 215 may change the settings of the connected peripheral devices based on the peripheral device information of the takeover target terminal 3.

The transaction processing unit 216 performs transaction processing in the first information processing terminal 2. The transaction processing unit 216 can also perform transaction processing for the takeover target terminal 3, that is, transaction processing based on the transaction information from the takeover target terminal 3.

The holding processing unit 217 determines whether the transaction status of the takeover processing terminal 2 is "during transaction" based on the transaction information stored in the auxiliary storage device 23. The holding processing unit 217 performs a holding process when the transaction status of the takeover processing terminal 2 is indicated as "during transaction". The holding process includes, for example, setting a holding flag in the transaction information.

The holding processing unit 217 determines whether the transaction processing for the takeover target terminal 3 has been completed by the transaction processing unit 216. The holding processing unit 217 may determine whether the transaction processing has been completed based on the updating of the transaction information. The holding processing unit 217 may determine whether the transaction process has been completed based on an instruction input by the user indicating the completion of the transaction. The instruction indicating the completion of the transaction can be a user selection of a transaction completion button or a transaction call button displayed on the display device 25.

When the transaction processing for the takeover target terminal 3 is completed by the takeover processing terminal 2, the holding processing unit 217 performs a transaction call process of calling the transaction information based on the held transaction process. Based on the instruction indicating the completion of the transaction, the holding processing unit 115 may call the transaction information based on the held transaction process. When the transaction process for the takeover target terminal 3 is completed, the holding processing unit 217 may acquire the transaction information based on the held transaction process from the server 1.

A configuration example of the second information processing terminal 3 will be described.

The second information processing terminal 3 is an electronic device including a processor 31, a main memory 32, an auxiliary storage device 33, a communication interface 34, and a display device 35. The units constituting the second information processing terminal 3 are connected to each other such that signals can be input and output.

The processor 31 corresponds to a central part of the second information processing terminal 3.. The processor 31 has a hardware configuration similar to that of the processor 11 described above. The processor 31 executes various operations by executing a program stored in advance in the main memory 32 or the auxiliary storage device 33.

The main memory 32 corresponds to a main storage part of the second information processing terminal 3. The main memory 32 has a hardware configuration similar to that of the main memory 12 described above. The main memory 32 stores a program.

The auxiliary storage device 33 corresponds to an auxiliary storage part of the second information processing terminal 3. The auxiliary storage device 33 has a hardware configuration similar to that of the auxiliary storage device 13 described above. The auxiliary storage device 33 stores the above-described program.

The auxiliary storage device 33 stores terminal information and transaction information of the second information processing terminal 3. The auxiliary storage device 33 may store information about a user of the second information processing terminal 3. The information about the user can be a store clerk code.

The communication interface 34 includes various interfaces that communicably connect the second information processing terminal 3 to other devices via a network according to a communication protocol. The second information processing terminal 3 is connectable to peripheral devices via the communication interface 34.

The display device 35 is capable of displaying various screens under the control of the processor 31. For example, the display device 35 is a liquid crystal display, an EL display, or the like.

The hardware configuration of the second information processing terminal 3 is not limited to the above-described configuration. In the second information processing terminal 3, the above-described components can be appropriately omitted and changed, and a new component can be appropriately added.

Certain functions implemented by the processor 31 will be described.

The processor 31 implements an acquisition unit 310, an update unit 311, a comparison unit 312, an output unit 313, and a setting unit 314. The units implemented by the processor 31 can also be referred to as functions. The units implemented by the processor 31 can also be said to be implemented by a control unit including the processor 31 and the main memory 32.

Similar to the acquisition unit 210, the acquisition unit 310 acquires a result of an authentication process from the server 1 via the communication interface 34.

The acquisition unit 310 acquires peripheral device information of the takeover target terminal 3 from the server 1 via the communication interface 34.

The update unit 311 updates the terminal information of the takeover target terminal 3. The update unit 311 updates the transaction information of the takeover target terminal 3.

The comparison unit 312 compares the peripheral device information acquired by the acquisition unit 310 with peripheral device information stored in the auxiliary storage device 33.

The output unit 313 outputs the terminal information of the takeover target terminal 3 to the server 1 via the communication interface 34. The output unit 313 may output the terminal information to the server 1 based on the elimination of the abnormal state of the takeover target terminal 3.

The setting unit 314 sets connection settings for peripheral devices based on the peripheral device information for the takeover target terminal 3 acquired by the acquisition unit 310. The setting unit 314 performs connection settings for the peripheral devices based on a comparison result of the comparison unit 312. For example, for a takeover target terminal 3 that has handed over transaction processing to a takeover processing terminal 2 due to a failure, when the failure (abnormal state) is recovered may attempt to connect again to certain peripheral device. In the present example, a case where the takeover processing terminal 2 has already taken over the peripheral device information of the peripheral devices previously connected to the takeover target terminal 3, and the peripheral device information associated with the takeover target terminal 3 and stored in the server 1 has been deleted will be explained. In this case, the peripheral device information of the takeover target terminal 3 acquired by the acquisition unit 310 will be different from the peripheral device information already stored in the auxiliary storage device 33. When the peripheral device information acquired by the acquisition unit 310 is different from the peripheral device information already stored in the auxiliary storage device 33, the setting unit 314 changes the settings of the connected peripheral devices accordingly. When the information of the connected peripheral devices is does not exist, the setting unit 314 performs a connection setting with a new peripheral device. When the acquired peripheral device information matches that already stored in the auxiliary storage device 33, the setting unit 314 maintains the connection with the peripheral devices.

Hereinafter, a procedure of a process performed by the POS system 100 will be described.

In the following description actions/operations of the server 1 may be referred to as those of the processor 11, those of first information processing terminal 2 may be referred to as those of the processor 21, and those of the second information processing terminal 3 may be referred to as those of the processor 31.

The process procedure described below is non-limiting and steps may be added, omitted, replaced, modified, or the like as appropriate.

In the following, in general, an abnormal state occurs in a second information processing terminal 3, and a first information processing terminal 2 takes over a process from the second information processing terminal 3. The second information processing terminal 3 is the takeover target terminal 3 from which the process is taken over. The first information processing terminal 2 is the takeover processing terminal 2 that takes over the processing of the takeover target terminal 3.

A case in which commodity registration is performed and a case in which a takeover process is performed in the first information processing terminal 2 will be described.

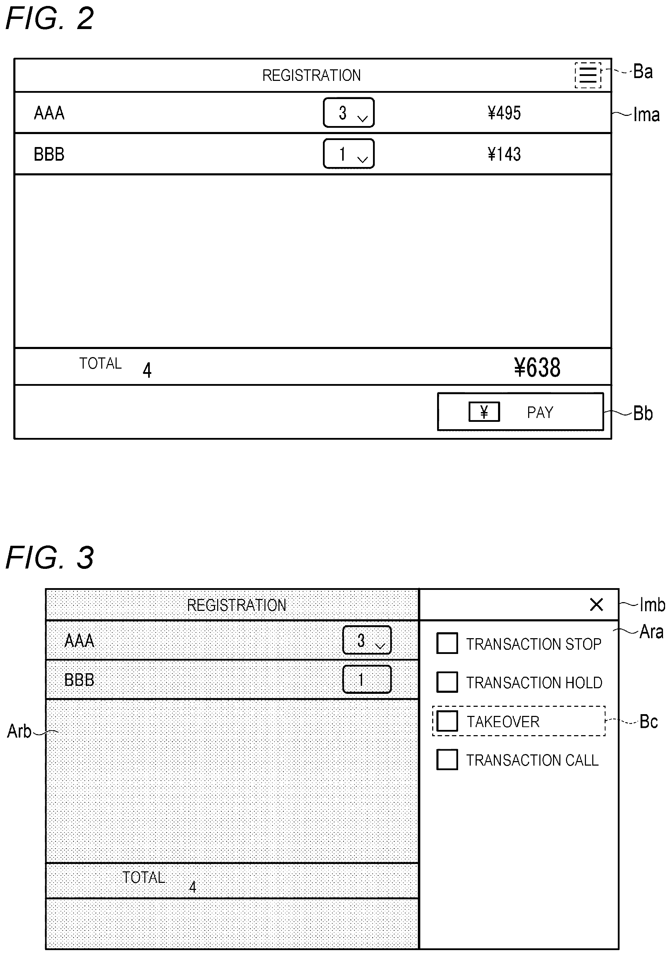

FIG. 2 is a schematic diagram illustrating an example of a commodity registration image displayed on the display device 25 of the first information processing terminal 2 according to an embodiment.

FIG. 2 shows a commodity registration image Ima displayed on the display device 25 when the commodity registration is performed on the first information processing terminal 2. The commodity registration image Ima is an image indicating registered commodity information. The commodity registration image Ima includes a menu button Ba and a payment button Bb.

The menu button Ba is a button for displaying a business menu. The business menu provides the options such as "transaction stop", "transaction hold", "takeover", and "transaction call". A transaction stop is a process of stopping an on-going transaction process. A transaction hold is a process of holding (pausing) a transaction process. A takeover refers to a process of taking over a transaction process being performed by another information processing terminal. A takeover also may include a process of taking over connection settings of a peripheral device of another information processing terminal. A transaction call is a process of calling (restarting) a held transaction, for example, resuming the held transaction.

The payment button Bb is a button for transitioning to a payment process.

The commodity registration image Ima can be updated each time a commodity registration is performed.

FIG. 3 is a schematic diagram illustrating an example of a business menu image displayed on the display device 25 of the first information processing terminal 2 according to the embodiment.

FIG. 3 shows a business menu image Imb displayed when the menu button Ba is selected by the user in the commodity registration image Ima shown in FIG. 2. The business menu image Imb includes a menu area Ara and a registered commodity area Arb. The menu area Ara is an area for selectably displaying the business menu. The registered commodity area Arb is an area for displaying the registered commodity information. The menu area Ara is displayed to be distinguishable from the registered commodity area Arb. For example, the menu area Ara may be displayed to be superimposed on the registered commodity area Arb. The menu area Ara may be displayed in a different display mode such as a background color different from that of the registered commodity area Arb. The menu area Ara includes a takeover button Bc. The menu area Ara may include, in addition to the takeover button Bc, a transaction stop button, a transaction hold button, a transaction call button, or the like.

When the user selects the takeover button Bc, the first information processing terminal 2 outputs a takeover instruction to the server 1.

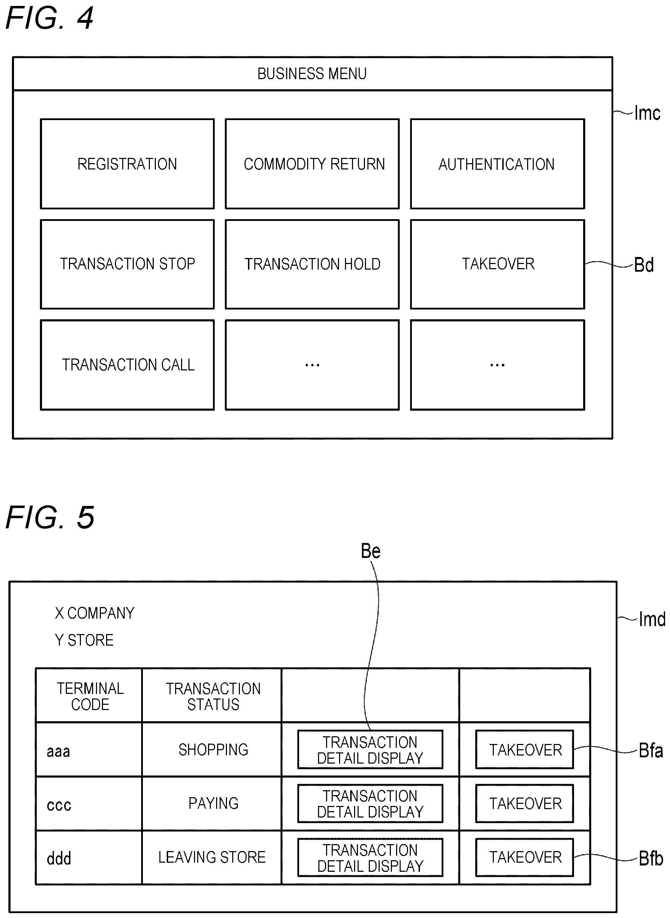

FIG. 4 is a schematic diagram illustrating another example of the business menu image displayed on the display device 25 of the first information processing terminal 2 according to the embodiment.

The first information processing terminal 2 may display a business menu image Imc as shown in FIG. 4 on the display device 25. The business menu image Imc is an area for selectably displaying a business menu. The business menu has options such as "registration", "commodity return", "authentication", "transaction stop", "transaction hold", "takeover", and "transaction call". The "registration" is for a commodity registration process. The "commodity return" is for a commodity return process. The "authentication" is for an authentication process of a store clerk or a terminal code.

The business menu image Imc includes a takeover button Bd. When the user selects the takeover button Bd, the first information processing terminal 2 outputs a takeover instruction to the server 1.

FIG. 5 is a schematic diagram illustrating an example of a takeover target terminal display image displayed on the display device 25 of the first information processing terminal 2 according to the embodiment.

FIG. 5 shows a takeover target terminal display image Imd for displaying information related to takeover target terminal candidates for the first information processing terminal 2. The takeover target terminal display image Imd includes information related to the takeover target terminal candidates acquired from the server 1 based on the takeover instruction from the first information processing terminal 2. The information related to the takeover target terminal candidates is information about a plurality of information processing terminals that have been narrowed down at least according to the company code and the store code of the first information processing terminal 2 from information stored in the server 1 about a plurality of terminals. The takeover target terminal candidates indicate one or more information processing terminals having the same company code and the same store code as the takeover processing terminal 2.

The takeover target terminal display image Imd includes a terminal code, a transaction status, and the like of each takeover target terminal candidate. The takeover target terminal display image Imd includes transaction detail display buttons Be and takeover buttons Bfa and Bfb. The transaction detail display button Be is a button for showing details of the transaction information of the associated terminal. The takeover buttons Bfa and Bfb are buttons for selecting a particular takeover target terminal. When the user selects one of the takeover button Bfa or Bfb, the first information processing terminal 2 outputs, to the server 1, the identification information of the terminal associated with the selected one of the takeover buttons Bfa or Bfb. Outputting the identification information to the server 1 corresponds to outputting the selection instruction for selecting a takeover target terminal.

Here, the user selects the terminal having a terminal code "aaa" and a present transaction status of "shopping" as the takeover target terminal 3. The user selects the takeover button Bfa in order to take over the transaction processing of the terminal code "aaa". The first information processing terminal 2 outputs, to the server 1, a selection instruction indicating that the terminal having the terminal code "aaa" has been selected. In this case, in the first information processing terminal 2, the takeover process for the terminal code "aaa" is performed. The first information processing terminal 2 may output, to the server 1, an instruction for taking over at least one of the transaction information and the terminal information according to the selection of the user. The same applies to a case in which the user selects a terminal having a terminal code "ccc" and a transaction status "paying" as the takeover target terminal.

If the user selects a terminal having a terminal code "ddd" with a transaction status "leaving store" as the takeover target terminal", the user selects the takeover button Bfb. The first information processing terminal 2 outputs, to the server 1, a selection instruction indicating that the terminal having the terminal code "ddd" has been selected. In this case, since the transaction process is already completed by the terminal having the terminal code "ddd", a takeover process of taking over only the terminal information of the terminal code "ddd" is performed by the first information processing terminal 2. The first information processing terminal 2 may output, to the server 1, an instruction to take over just the terminal information in response to the selection instruction of the terminal code "ddd" or by the selection of the user. When a terminal having a transaction status "leaving store" is selected, the first information processing terminal 2 may display, on the display device 25, a pop-up notification such as "only peripheral device information is taken over". The first information processing terminal 2 may display an icon indicating that only the peripheral device information has been taken over for the terminal having the transaction status "leaving store".

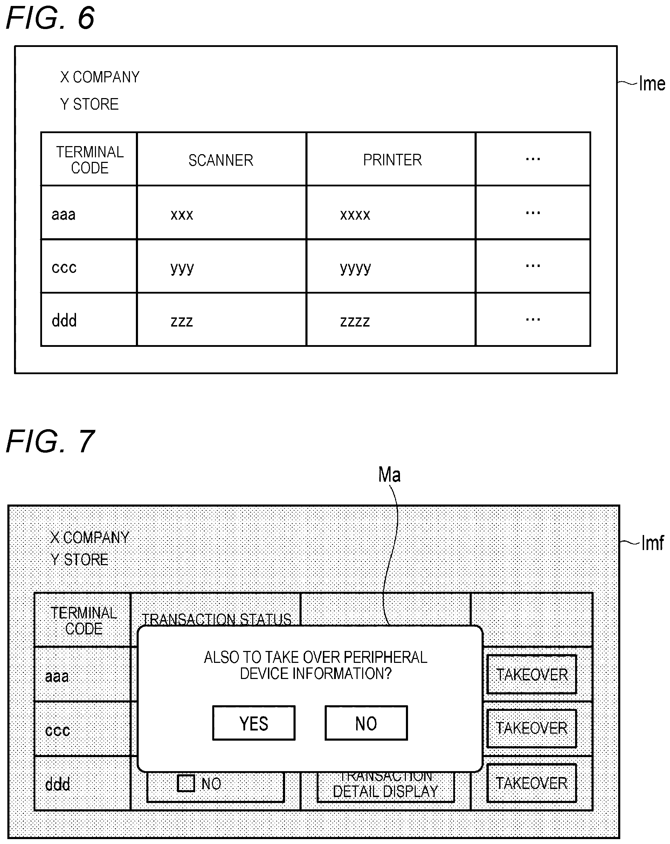

FIG. 6 is a schematic diagram illustrating an example of a terminal information display image displayed on the display device 25 of the first information processing terminal 2 according to the embodiment. FIG. 6 shows a terminal information display image Ime displayed when an instruction to display the peripheral device information of a takeover target terminal is input by the user. The first information processing terminal 2 may display the terminal information display image Ime in response to the selection of the transaction detail display button Be by the user in the takeover target terminal display image Imd.

The terminal information display image Ime indicates peripheral device information of a takeover target terminal candidate. The terminal information display image Ime may include identification information such as a terminal code of the takeover target terminal candidate and a name of a peripheral device connected to the takeover target terminal candidate.

FIG. 7 is a schematic diagram illustrating an example of a takeover selection image displayed on the display device 25 of the first information processing terminal 2 according to the embodiment. In response to the selection of the takeover target terminal by the user, the first information processing terminal 2 may display a takeover selection image Imf on the display device 25. The takeover selection image Imf includes a selection window Ma for selecting whether to take over the peripheral device information of the takeover target terminal. The selection window Ma includes, for example, a text message such as "also to take over peripheral device information?", and selection buttons of "YES" and "NO". The selection window Ma may be displayed as a pop-up notification.

The commodity registration process performed by the server 1 will be described.

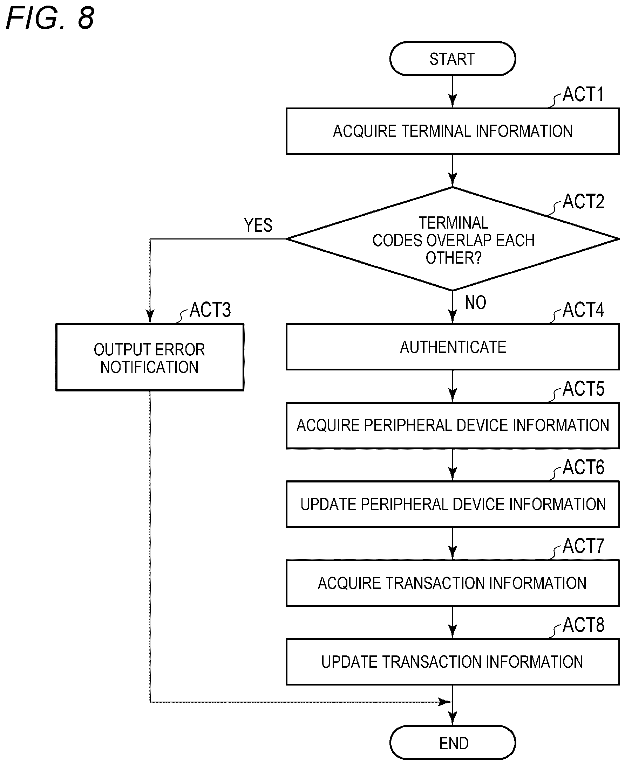

FIG. 8 is a flowchart illustrating an example of a process performed by the server 1 according to the embodiment.

FIG. 8 shows the procedure performed by the server 1 when the commodity registration process is performed in the first information processing terminal 2. The server 1 performs a process similar to that in FIG. 8 in regard to the commodity registration process in one or more information processing terminals. The server 1 may perform an authentication process for authenticating a store clerk who is a user of the first information processing terminal 2 before the process or in the middle of the process in FIG. 8.

The acquisition unit 110 acquires the terminal information from the first information processing terminal 2 (ACT 1). In ACT 1, the acquisition unit 110 acquires at least a company code, a store code, and a terminal code from the first information processing terminal 2.

The determination unit 113 determines whether terminal codes overlap each other (ACT 2). In ACT 2, for example, the determination unit 113 refers to the terminal information stored in the auxiliary storage device 13, and determines whether the terminal code is used by another terminal. When the terminal code is not used by another terminal, the determination unit 113 determines that the first information processing terminal 2 can be identified by the terminal code. If the terminal code is used by another terminal, the determination unit 113 determines that the first information processing terminal 2 cannot be uniquely identified by the terminal code. When the determination unit 113 determines that terminal codes overlap each other (ACT 2: YES), the process transitions from ACT 2 to ACT 3. When the determination unit 113 determines that the terminal codes do not overlap each other (ACT 2: NO), the process transitions from ACT 2 to ACT 4. Terminal codes not overlapping each means that the first information processing terminal 2 can be identified. When terminal codes do not overlap each other the authentication of the first information processing terminal 2 is complete.

The output unit 114 outputs an error notification to the first information processing terminal 2 based on a determination result of the determination unit 113 (ACT 3).

The output unit 114 outputs an authentication completion notification based on the determination result of the determination unit 113 (ACT 4). In ACT 4, for example, the output unit 114 outputs the authentication completion notification indicating that the authentication is completed.

The acquisition unit 110 acquires the peripheral device information of the first information processing terminal 2 (ACT 5). In ACT 5, the acquisition unit 110 acquires the peripheral device information from the first information processing terminal 2 based on the completion of the connection setting with the peripheral device in the first information processing terminal 2.

The update unit 112 updates the terminal information associated with the first information processing terminal 2 when the peripheral device information is acquired by the acquisition unit 110 (ACT 6). In ACT 6, the update unit 112 stores the peripheral device information in association with the terminal information in the auxiliary storage device 13.

The acquisition unit 110 acquires the transaction information from the first information processing terminal 2 (ACT 7). In ACT 7, the acquisition unit 110 acquires the transaction information for the first information processing terminal 2. The acquisition unit 110 acquires the transaction information based on the fact that the transaction processing, such as a commodity registration process and/or a payment process, has been performed at the first information processing terminal 2.

The update unit 112 updates the transaction information when the transaction information is acquired by the acquisition unit 110 (ACT 8). In ACT 8, the update unit 112 updates the transaction information associated with the first information processing terminal 2 in the auxiliary storage device 13.

The takeover process performed by the server 1 will be described.

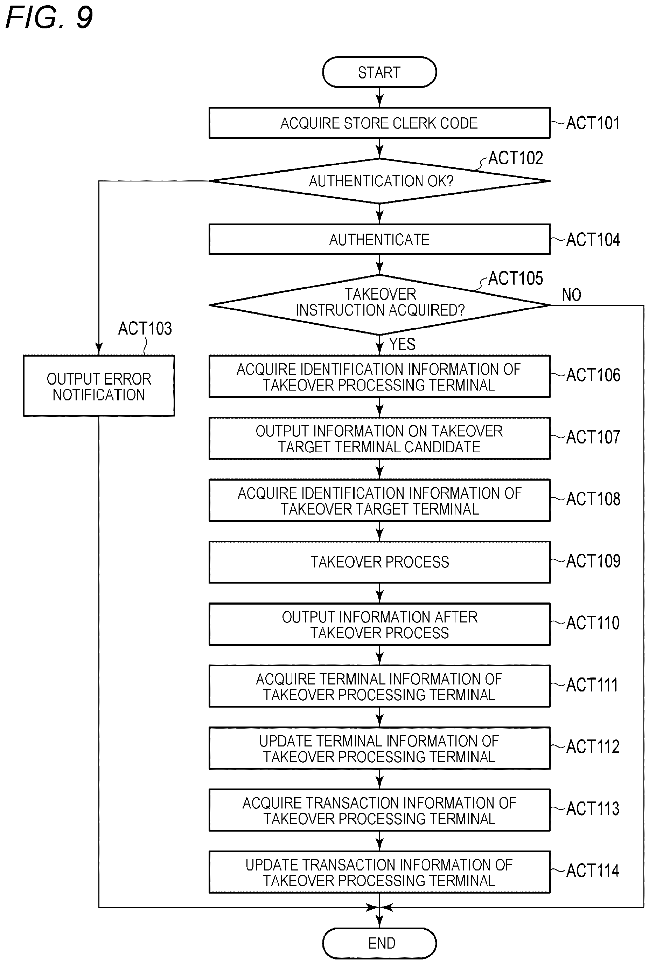

FIG. 9 is a flowchart of the takeover process performed by the server 1 according to the embodiment.

FIG. 9 shows a procedure of performed by the server 1 when the takeover process is performed by the first information processing terminal 2. In the following description, the first information processing terminal 2 takes over the transaction process from the second information processing terminal 3 having a transaction status "shopping". The first information processing terminal 2 is the takeover processing terminal 2, and the second information processing terminal 3 is the takeover target terminal 3.

The acquisition unit 110 acquires the store clerk code from the takeover processing terminal 2 (ACT 101). In ACT 101, the acquisition unit 110 acquires the store clerk code based on the input of the store clerk code performed by the user of the takeover processing terminal 2 via an input device or the reading of the store clerk code via a scanner.

The determination unit 113 determines whether the store clerk code can be authenticated (ACT 102). In ACT 102, the determination unit 113 refers to user information or the like stored in the auxiliary storage device 13, and determines whether the store clerk code can be authenticated. When the determination unit 113 determines that the store clerk code can be authenticated (ACT 102: YES), the process transitions from ACT 102 to ACT 104. When the determination unit 113 determines that the store clerk code cannot be authenticated (ACT 102: NO), the process transitions from ACT 102 to ACT 103.

The output unit 114 outputs an error notification to the first information processing terminal 2 based on a determination result of the determination unit 113 (ACT 103).

The output unit 114 outputs an authentication completion notification based on the determination result of the determination unit 113 (ACT 104). In ACT 104, the output unit 114 outputs the authentication completion notification indicating that the authentication is completed.

The instruction acquisition unit 111 determines whether a takeover instruction has been received from the takeover processing terminal 2 (ACT 105). When the instruction acquisition unit 111 determines that the takeover instruction is received (ACT 105: YES), the process transitions from ACT 105 to ACT 106. When the instruction acquisition unit 111 determines that the takeover instruction is not received (ACT 105: NO), the processing ends. The takeover instruction may include the identification information of the takeover processing terminal 2.

The acquisition unit 110 acquires the identification information of the takeover processing terminal 2 from the takeover processing terminal 2 (ACT 106). In ACT 106, the acquisition unit 110 may acquire the identification information of the takeover processing terminal 2 in response to the takeover instruction being acquired by the instruction acquisition unit 111. The acquisition unit 110 acquires at least the terminal code of the takeover processing terminal 2. The acquisition unit 110 may acquire the company code and the store code of the takeover processing terminal 2.

The output unit 114 outputs, to the takeover processing terminal 2, information related to the candidates for the takeover target terminal 3 (ACT 107). In ACT 107, the output unit 114 refers to the terminal information and the transaction information stored in the auxiliary storage device 13 and extracts the candidates. The output unit 114 extracts, as the candidates for the takeover target terminal 3, terminals associated with the same company code and store code as those of the takeover processing terminal 2. The output unit 114 acquires the terminal information and the transaction information associated with the candidates. The output unit 114 outputs, to the takeover processing terminal 2, the acquired terminal information and transaction information related to the candidates.

The acquisition unit 110 acquires, from the takeover processing terminal 2, the identification information of a takeover target terminal 3 selected at the takeover processing terminal 2 (ACT 108). In ACT 108, the acquisition unit 110 acquires the terminal code of the takeover target terminal 3. The acquisition unit 110 may acquire the transaction code of the takeover target terminal 3. The acquisition unit 110 may acquire both the terminal code and the transaction code of the takeover target terminal 3.

The takeover processing unit 116 starts the takeover process based on the identification information of the takeover target terminal 3 (ACT 109). In ACT 109, the takeover processing unit 116 enables the transaction information associated with the takeover target terminal 3 (and stored in the auxiliary storage device 13) to be used in the takeover processing terminal 2. The takeover processing unit 116 may update the transaction information for the takeover processing terminal 2 based on the transaction information associated with the takeover target terminal 3. The takeover processing unit 116 may also or instead update the terminal information of the takeover processing terminal 2 based on the terminal information associated with the takeover target terminal 3. Here, "update" includes addition, overwrite, and/or change.

The takeover processing unit 116 updates the terminal information and the transaction information associated with the takeover target terminal 3. For example, the takeover processing unit 116 may delete the peripheral device information of the terminal information associated with the takeover target terminal 3. The takeover processing unit 116 may add, to the peripheral device information of the terminal information associated with the takeover target terminal 3, information indicating that the takeover processing is performed. The takeover processing unit 116 may delete the transaction information associated with the takeover target terminal 3. The takeover processing unit 116 may add, to the transaction information associated with the takeover target terminal 3, information indicating that the takeover process is performed.

The output unit 114 outputs information associated with the takeover processing terminal 2 (or information to be associated with the takeover processing terminal 2) by the takeover process to the takeover processing terminal 2 (ACT 110). In ACT 110, the output unit 114 outputs at least one of the terminal information and the transaction information to the takeover processing terminal 2. The output unit 114 may output, to the takeover processing terminal 2, either one or both of the terminal information and the transaction information as updated by the takeover processing unit 116. The output unit 114 may output at least one of the updated terminal information and transaction information of the takeover processing terminal 2 to the takeover processing terminal 2 based on the selection of the user of the takeover processing terminal 2. When the transaction status of the takeover target terminal 3 is "leaving store", the output unit 114 outputs only the updated terminal information to the takeover processing terminal 2.

The takeover processing terminal 2 performs a connection setting with a peripheral device based on the acquired terminal information. For example, the takeover processing terminal 2 performs a connection setting such as newly connecting to a peripheral device previously associated with takeover target terminal 3 based on updated peripheral device information. The takeover processing terminal 2 takes over the transaction, which was being performed at the takeover target terminal 3, based on the acquired transaction information.

The acquisition unit 110 acquires the peripheral device information from the takeover processing terminal 2 (ACT 111). In ACT 111, the acquisition unit 110 acquires the peripheral device information based on the completion of the connection setting with the peripheral device. The peripheral device information may include information indicating that the connection setting was successfully completed.

The update unit 112 updates the peripheral device information associated with the takeover processing terminal 2 (ACT 112).

The acquisition unit 110 acquires the transaction information from the takeover processing terminal 2 (ACT 113). In ACT 113, the acquisition unit 110 acquires the transaction information based on the completion of the transaction process started at the takeover target terminal 3 but taken over by the takeover processing terminal 2. The acquisition unit 110 may acquire transaction information each time the transaction information based on the taken over transaction process is updated.

The update unit 112 updates the transaction information associated with the takeover processing terminal 2 based on the transaction information acquired by the acquisition unit 110 (ACT 114).

When only the transaction information is taken over by the takeover processing terminal 2, the peripheral device information of the takeover processing terminal 2 does not necessarily include the peripheral device information of the takeover target terminal 3.

When only the peripheral device information is taken over by the takeover processing terminal 2, the transaction information does not need to include the transaction information of the takeover target terminal 3.

When the server 1 acquires a takeover instruction from the takeover processing terminal 2, the server 1 may inquire of the takeover target terminal 3 whether to accept the takeover by the takeover processing terminal 2. In this case, when the server 1 acquires an instruction to accept the takeover process from the takeover target terminal 3, the server 1 starts the takeover process in the takeover processing terminal 2.

The takeover process in the first information processing terminal 2 will be described.

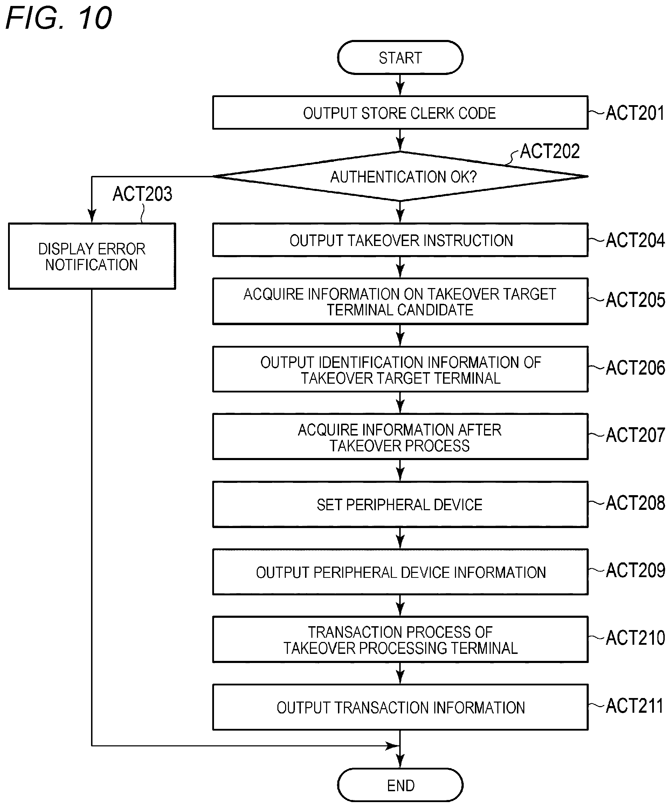

FIG. 10 is a flowchart of a takeover process performed by the first information processing terminal 2 according to the embodiment.

FIG. 10 shows a procedure of a takeover process performed by the first information processing terminal 2. In the following description, the first information processing terminal 2 takes over the transaction process from the second information processing terminal 3 having a transaction status "shopping". The first information processing terminal 2 is the takeover processing terminal 2, and the second information processing terminal 3 is the takeover target terminal 3.

The output unit 213 outputs the store clerk code input by the user to the server 1 (ACT 201). In ACT 201, the output unit 213 outputs the store clerk code based on the input of the store clerk code performed by the user via an input device or the reading of the store clerk code via a scanner.

The acquisition unit 210 acquires, from the server 1, the result of the authentication process based on the store clerk code (ACT 202). When the authentication completion notification is acquired by the acquisition unit 210 (ACT 202: YES), the process transitions from ACT 202 to ACT 204. In this case, the display control unit 214 may cause the display device 25 to display the authentication completion notification. When the authentication completion notification is not acquired by the acquisition unit 210 (ACT 202: NO), the process transitions from ACT 202 to ACT 203.

The display control unit 214 causes the display device 25 to display an error notification based on the determination result (ACT 203).

The output unit 213 outputs a takeover instruction (input by the user) to the server 1 (ACT 204). In ACT 204, the output unit 213 outputs the takeover instruction based on the input of an instruction to perform a takeover process (as selected from a business menu or the like) by the user. The output unit 213 may output the identification information of the takeover processing terminal 2 to the server 1 at this time. The identification information of the takeover processing terminal 2 may include at least one of a company code, a store code, and a terminal code.

The acquisition unit 210 acquires information related to the candidates to be the takeover target terminal 3 from the server 1 (ACT 205). In ACT 205, the acquisition unit 210 acquires the terminal information and the transaction information associated with the candidates.

The output unit 213 outputs, to the server 1, the identification information of the takeover target terminal 3 selected by the user (ACT 206). In ACT 206, the output unit 213 outputs the terminal code of the selected candidate for the takeover target terminal 3. The output unit 213 may also output the transaction code corresponding to selected candidate for the takeover target terminal 3.

The acquisition unit 210 acquires, from the server 1, information to now be associated with the takeover processing terminal 2 by the takeover process (ACT 207). In ACT 207, the acquisition unit 210 acquires at least one of the terminal information and the transaction information of the takeover target terminal 3 for the takeover processing terminal 2. The user may select whether the terminal information and/or transaction information is acquired. When the transaction status for the takeover target terminal 3 is "leaving store", the acquisition unit 210 may acquire only the available terminal information.

The setting unit 215 performs a connection setting for peripheral devices based on terminal information acquired by the acquisition unit 210 (ACT 208). In ACT 208, the setting unit 215 performs a connection setting for newly connecting to a peripheral device based on peripheral device information acquired by the acquisition unit 210.

The output unit 213 outputs the peripheral device information to the server 1 (ACT 209). In ACT 209, the output unit 213 outputs the peripheral device information after the completion of the connection setting with a peripheral device. The peripheral device information may include information indicating that the connection setting has been completed.

The transaction processing unit 216 takes over the transaction processing that was being performed by the takeover target terminal 3 (ACT 210). In ACT 210, the transaction processing unit 216 continues the performance of a transaction based on the acquired transaction information after the takeover process. For example, when the acquired transaction information indicates that a commodity registration process was being performed at the takeover target terminal 3, the transaction processing unit 216 continues a commodity registration process. When the transaction information after the takeover process indicates that a payment process was being performed at the takeover target terminal 3, the transaction processing unit 216 continues the payment process.

The output unit 213 outputs transaction information to the server 1 (ACT 211). In ACT 211, the output unit 213 outputs the updated or additional transaction information to the server 1 based on the continuation or completion of the transaction taken over by the transaction processing unit 216. The output unit 213 may output the transaction information to the server 1 each time the transaction information is updated.

When the takeover target terminal 3 is in an abnormal state (malfunctioning state), the takeover process may be forcibly performed by the takeover processing terminal 2. In this case, based on the fact that the takeover target terminal 3 is in the abnormal state, the server 1 may perform the takeover process for both the terminal information and the transaction information of the takeover target terminal 3.

A case in which a transaction holding process is performed in the first information processing terminal 2 will be described.

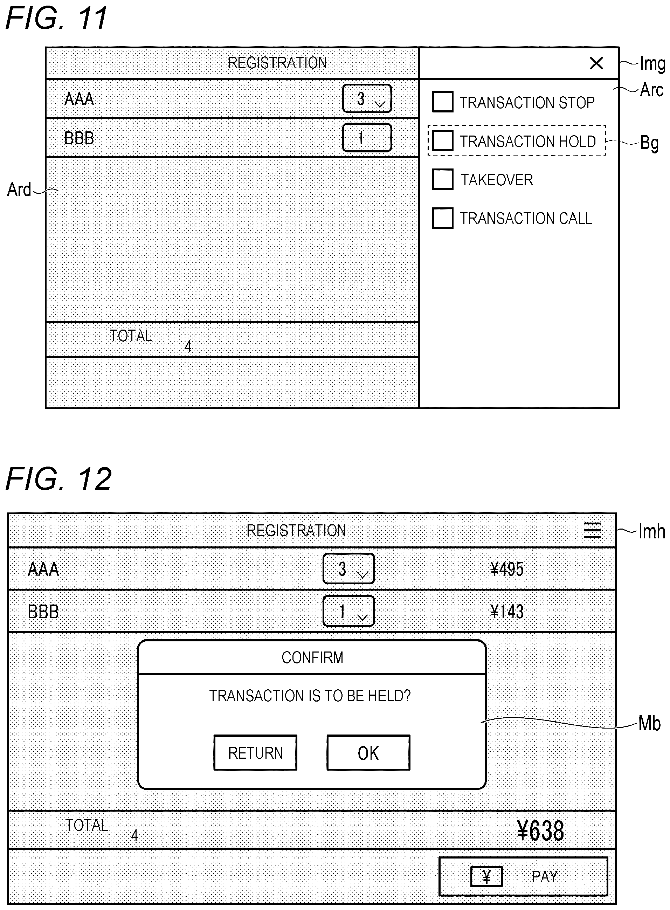

FIG. 11 is a schematic diagram illustrating an example of the business menu image displayed on the display device 25 of the first information processing terminal 2 according to the embodiment.

FIG. 11 shows a business menu image Img displayed when the menu button Ba is selected by the user in the commodity registration image Ima shown in FIG. 2. The business menu image Img includes a menu area Arc and a registered commodity area Arb similar to the business menu image Imb.

If a takeover instruction is to be issued by the takeover processing terminal 2 before other transaction processing is completed by the takeover processing terminal 2, the takeover processing terminal 2 interrupts the present transaction processing at the takeover processing terminal 2 and then performs a transaction process taken over from the takeover target terminal 3. In this case, in order to hold the original transaction processing in the takeover processing terminal 2 in a held (paused) state, a transaction holding process is performed by the takeover processing terminal 2.

When the user selects a transaction hold button Bg before the user selects a takeover button, the first information processing terminal 2 may output a transaction hold instruction to the server 1. When the user selects the transaction hold button Bg, the first information processing terminal 2 performs a holding process. When the user selects the transaction hold button Bg, the first information processing terminal 2 may display a holding confirmation image shown in FIG. 12 on the display device 25.

FIG. 12 is a schematic diagram illustrating an example of the holding confirmation image displayed on the display device 25 of the first information processing terminal 2 according to the embodiment.

FIG. 12 shows a holding confirmation image Imh displayed when the transaction hold button Bg is selected by the user in the business menu image Img shown in FIG. 11. The holding confirmation image Imh includes a selection window Mb for confirming the transaction hold. The selection window Mb includes, for example, a text message such as "transaction is to be held?", and a selection button such as "return" or "OK". The selection window Mb may be displayed as a pop-up notification.

When the "OK" button is selected by the user, the first information processing terminal 2 outputs a transaction hold instruction to the server 1. If the "return" button is selected by the user, the first information processing terminal 2 transitions (returns) to a commodity registration image or the like.

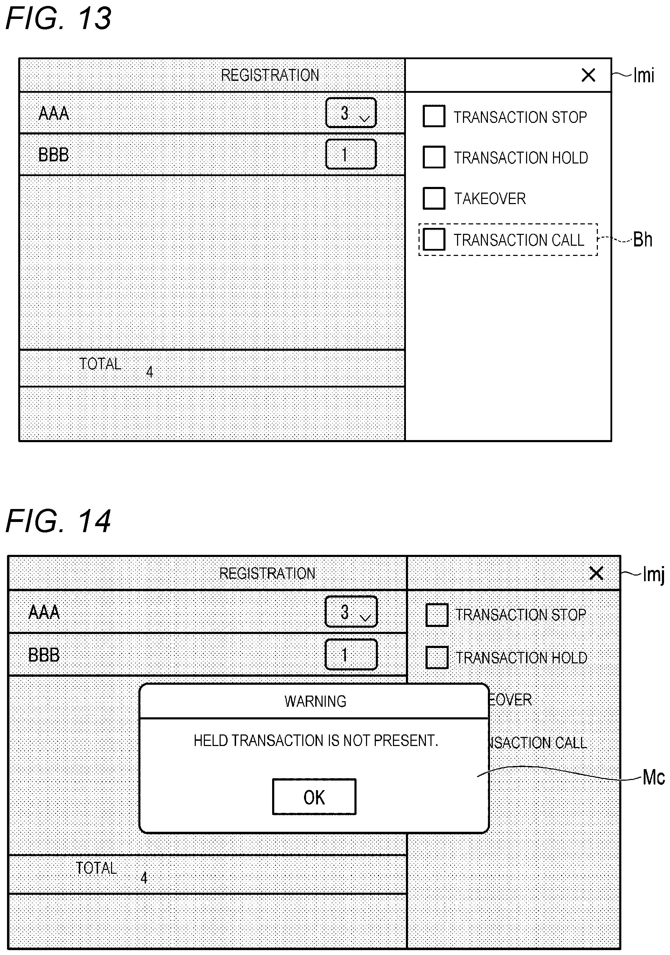

FIG. 13 is a schematic diagram illustrating an example of the business menu image displayed on the display device 25 of the first information processing terminal 2 according to the embodiment.

FIG. 13 shows a business menu image Imi displayed when the menu button Ba is selected by the user in the commodity registration image Ima shown in FIG. 2. The business menu image Imi includes the menu area Arc and the registered commodity area Arb similar to the business menu image Imb.

For example, when the holding process is performed by the takeover processing terminal 2, the takeover processing terminal 2 may complete the transaction processing taken over from the takeover target terminal 3, and then resume the previously held original transaction processing. In this case, in order to call (recall)the transaction processing held for the takeover processing terminal 2, a transaction call process is performed by the takeover processing terminal 2.

When the user selects a transaction call button Bh, the first information processing terminal 2 may output a call instruction for returning to the previously held transaction to the server 1.

FIG. 14 is a schematic diagram illustrating an example of the holding confirmation image displayed on the display device 25 of the first information processing terminal 2 according to the embodiment.

FIG. 14 shows a warning image Imj displayed when the transaction call button Bh is selected by the user in the business menu image Imi shown in FIG. 13. If there is no transaction held by the first information processing terminal 2, the first information processing terminal 2 displays the warning image Imj on the display device 25. The warning image Imj includes a warning window Mc indicating that a held transaction is not present. The warning window Mc includes, for example, a text message such as "held transaction is not present" and a confirmation button such as "OK".

The warning window Mc may be displayed as a pop-up notification.

When the "OK" button is selected by the user, the first information processing terminal 2 transitions to a commodity registration image or the like.

The holding process performed by the server 1 will be described.

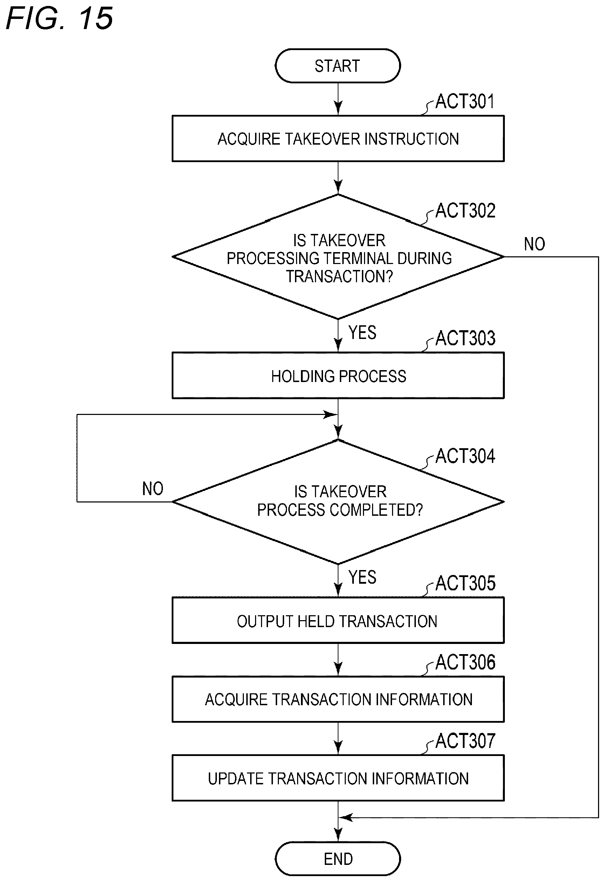

FIG. 15 is a flowchart illustrating an example of a procedure of the holding process performed by the server 1 according to the embodiment. FIG. 15 illustrates a procedure of an information process performed by the server 1 when a takeover instruction is acquired while another transaction process is already being performed in the takeover processing terminal 2.

The instruction acquisition unit 111 acquires, from the takeover processing terminal 2, a takeover instruction (request) for performing a takeover process (ACT 301).

The holding processing unit 115 determines whether the transaction status of the takeover processing terminal 2 is presently "during transaction" (ACT 302). In ACT 302, the holding processing unit 115 refers to the transaction information for the takeover processing terminal 2 already stored in the auxiliary storage device 13, and determines whether the takeover processing terminal 2 is "during transaction". When the holding processing unit 115 determines that the takeover processing terminal 2 is "during transaction" (ACT 302: YES), the process transitions from ACT 302 to ACT 303. When the holding processing unit 115 determines that the takeover processing terminal 2 is not "during transaction" (ACT 302: NO), the process of the server 1 ends. In this case, the takeover process can be performed by the takeover processing terminal 2 without the need of a holding process.

The holding processing unit 115 performs a holding process of a transaction (ACT 303). In ACT 303, the holding processing unit 115 sets a holding flag in the transaction information stored in the auxiliary storage device 13 for the takeover processing terminal 2.

The holding processing unit 115 determines whether the transaction processing taken over from the takeover target terminal 3 has been completed based on the transaction information acquired from the takeover processing terminal 2 (ACT 304). In ACT 304, the holding processing unit 115 determines whether the transaction process has been completed based on the fact that the transaction information acquired from the takeover processing terminal 2 indicates the completion of the transaction. In some examples, the holding processing unit 115 may determine the transaction process has been completed based on receiving of an instruction indicating the completion of the transaction acquired from the takeover processing terminal 2. When the holding processing unit 115 determines that the transaction process is completed (ACT 304: YES), the process transitions from ACT 304 to ACT 305. When the holding processing unit 115 determines that the transaction process is not completed (ACT 304: NO), the process repeats ACT 304.

The holding processing unit 115 outputs, to the takeover processing terminal 2, the transaction information based on the previously held transaction process (ACT 305). In ACT 305, the holding processing unit 115 acquires, from the auxiliary storage device 13, the transaction information for which the holding flag has been set. The holding processing unit 115 outputs this acquired held transaction information to the takeover processing terminal 2.

The takeover processing terminal 2 resumes the previously held (paused) transaction process based on the transaction information acquired from the server 1. The takeover processing terminal 2 updates transaction information for the resumed transaction process. The takeover processing terminal 2 outputs the updated transaction information to the server 1.

The acquisition unit 110 acquires the transaction information from the takeover processing terminal 2 (ACT 306). In ACT 306, the acquisition unit 110 acquires the transaction information for the resumed transaction from the takeover processing terminal 2. The acquisition unit 110 may acquire the transaction information from the takeover processing terminal 2 each time the transaction information is updated by the takeover processing terminal 2.

The update unit 112 updates the transaction information (ACT 307). In ACT 307, the update unit 112 updates the transaction information. The update unit 112 may update the transaction information each time the transaction information is acquired from the takeover processing terminal 2.

The holding processing unit 115 may perform the holding process for the transaction in ACT 303 based on the input of an instruction to perform a holding process from the user of the takeover processing terminal 2.

When the holding process cannot be performed, the server 1 may output a notification of prohibiting a takeover process, instead of performing the holding process for the takeover processing terminal 2.

A holding process performed by the first information processing terminal 2 will be described.

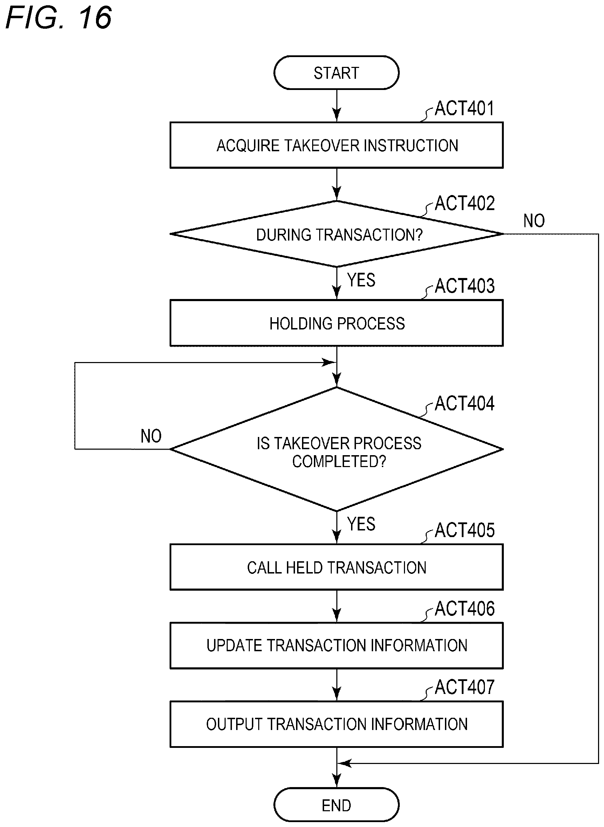

FIG. 16 is a flowchart illustrating an example of a procedure of a holding process performed by the first information processing terminal 2 according to the embodiment.

FIG. 16 illustrates a procedure performed by the takeover processing terminal 2 when a takeover instruction is acquired from the user while a transaction process is already being performed at the takeover processing terminal 2.

The instruction acquisition unit 211 acquires the takeover instruction input by the user (ACT 401).

The holding processing unit 217 determines whether the transaction status of the takeover processing terminal 2 is "during transaction" (ACT 402). In ACT 402, the holding processing unit 217 refers to the transaction information stored in the auxiliary storage device 23, and checks whether the transaction status is "during transaction". When the holding processing unit 217 determines that the transaction status is "during transaction" (ACT 402: YES), the process transitions from ACT 402 to ACT 403. When the holding processing unit 217 determines that the transaction status is not "during transaction" (ACT 402: NO), the process ends.

The holding processing unit 217 performs a holding process of a transaction (ACT 403). In ACT 403, the holding processing unit 217 outputs, to the server 1, transaction information for which a holding flag is set. The holding processing unit 217 may set the holding flag in the transaction information stored in the auxiliary storage device 23.

The holding processing unit 217 determines whether the transaction process taken over from the takeover target terminal 3 has been completed based on the associated transaction information (ACT 404). In ACT 404, the holding processing unit 217 determines whether the transaction process has been completed based the transaction information indicating a completion of the transaction. When the holding processing unit 217 determines that the transaction process has been completed (ACT 404: YES), the process transitions from ACT 404 to ACT 405. When the holding processing unit 217 determines that the transaction process is not completed (ACT 404: NO), the process repeats ACT 404.

The holding processing unit 217 calls (recalls) the held transaction process (ACT 405). In ACT 405, the holding processing unit 217 acquires, from the server 1, the transaction information for which the holding flag was set. In some examples, the holding processing unit 217 may acquire the transaction information for which the holding flag was set from the auxiliary storage device 23.

The transaction processing unit 216 resumes the transaction processing based on the previously held transaction information.

The update unit 212 updates the transaction information (ACT 406). In ACT 406, the update unit 212 updates the transaction information for the resumed transaction at the takeover processing terminal 2. The update unit 212 may update transaction information each time the transaction information is acquired from the takeover processing terminal 2.

The output unit 213 outputs the transaction information to the server 1 (ACT 407). In ACT 407, the output unit 213 outputs, to the server 1, the transaction information for the resumed transaction. The output unit 213 may output the transaction information to the server 1 each time transaction information is updated at the takeover processing terminal 2.

A peripheral device connection process after recovery in the second information processing terminal 3 will be described.

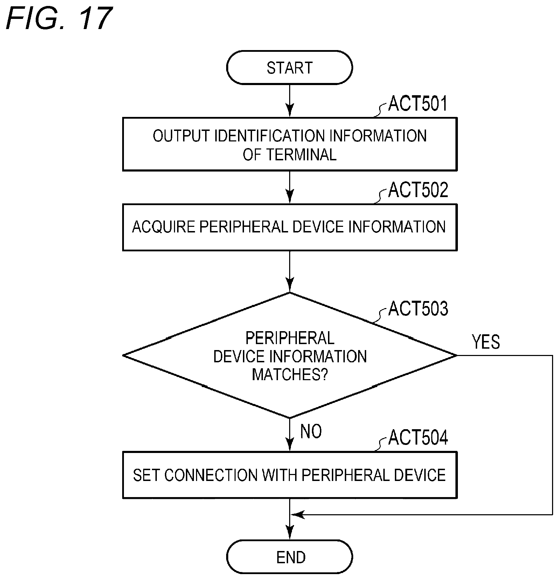

FIG. 17 is a flowchart illustrating an example of a procedure of a peripheral device connection process performed by the second information processing terminal 3 according to the embodiment.

FIG. 17 illustrates a procedure of an information process when the abnormal state is eliminated after the transaction process for the second information processing terminal 3 has started to be performed by the first information processing terminal 2.

The output unit 313 outputs the identification information of the takeover target terminal 3 to the server 1 (ACT 501). In ACT 501, the output unit 313 outputs the terminal information to the server 1 based on an elimination (clearing) of the abnormal state of the takeover target terminal 3. The output unit 313 outputs at least the terminal code to the server 1. The server 1 may perform the authentication in ACT 2 based on the received terminal code from the takeover target terminal 3.

The acquisition unit 310 acquires the peripheral device information of the takeover target terminal 3 from the server 1 (ACT 502). In ACT 502, the acquisition unit 310 acquires, from the server 1, the peripheral device information associated with the takeover target terminal 3 after the takeover process.

The comparison unit 312 determines whether the peripheral device information acquired by the acquisition unit 310 matches the peripheral device information already stored in the auxiliary storage device 33 (ACT 503). In ACT 503, the comparison unit 312 compares the peripheral device information associated with the takeover target terminal 3 after the takeover process to the peripheral device information stored in the auxiliary storage device 33. A case in which the takeover target terminal 3 that has handed over to the takeover processing terminal 2 is recovered from a failure will be described. When the takeover processing terminal 2 has already taken over the peripheral device information of the peripheral devices connected to the takeover target terminal 3, the peripheral device information associated with the takeover target terminal 3 and stored in the server 1 is deleted. In this case, the peripheral device information of the takeover target terminal 3 acquired by the acquisition unit 310 is different from the peripheral device information stored in the auxiliary storage device 33. The comparison unit 312 determines whether the peripheral device information matches based on the comparison result. When the comparison unit 312 determines that the peripheral device information matches (ACT 503: YES), the process ends. In this case, the setting unit 314 maintains the connection of the peripheral devices. When the comparison unit 312 determines that the peripheral device information does not match (ACT 503: NO), the process transitions from ACT 503 to ACT 504.

The setting unit 314 sets connection with the peripheral devices (ACT 504). In ACT 504, when the connection setting with the peripheral devices is not performed based on the peripheral device information acquired by the acquisition unit 310, the setting unit 314 performs connection setting with a new peripheral device.

### (Effects)

The system according to an embodiment includes a server 1. The server 1 can acquire the information related to candidates for a takeover target terminal 3 from one or more terminals and output to a takeover processing terminal 2 the transaction information for the candidates for a takeover target terminal 3.

If a takeover target terminal 3 indicates an abnormal state such as a failure, the server 1 can acquire the information related to the takeover target terminal 3. The server 1 can output, to the takeover processing terminal 2, transaction information for a transaction processing at the takeover target terminal 3. The server 1 can permit the takeover processing terminal 2 to take over the transaction processing being performed at the takeover target terminal 3. Accordingly, the system can continue transaction processing being performed by the takeover target terminal 3 at the takeover processing terminal 2 when the takeover target terminal 3 becomes abnormal.

The system according to an embodiment includes a takeover processing terminal 2 capable of displaying information about the candidates for the takeover target terminal 3 and outputting a candidate selection to the server 1. Therefore, the takeover target terminal 3 can be easily selected from the candidates for the takeover target terminal 3. Accordingly, the system can continue the transaction processing when an error occurs at one terminal.

The takeover processing terminal 2 according to an embodiment can display the status information of the candidates of the takeover target terminal 3. Therefore, the takeover processing terminal 2 can easily select the takeover target terminal 3 by reference to the status of the candidates of the takeover target terminal 3. Accordingly, the system can continue a transaction being performed by the takeover target terminal 3 on the takeover processing terminal 2.

The server 1 according to an embodiment can output, to the takeover processing terminal 2, the peripheral device information corresponding to the takeover target terminal 3. Therefore, the takeover processing terminal 2 can take over the connections to the peripheral devices of takeover target terminal 3 based on the peripheral device information acquired from the server 1. Accordingly, when the takeover target terminal 3 itself is abnormal but the peripheral devices remain functional, the system can cause the takeover processing terminal 2 to take over the connection(s) to the peripheral devices of the takeover target terminal 3, without necessarily resetting the connection with the peripheral devices.

The takeover processing terminal 2 according to an embodiment can acquire the peripheral device information from the server 1, and can use the peripheral devices based on the acquired peripheral device information. Therefore, the takeover processing terminal 2 can take over the connections with peripheral devices of takeover target terminal 3 based on the peripheral device information acquired from the server 1. Accordingly, when the takeover target terminal 3 is abnormal, the system can permit the takeover processing terminal 2 to use peripheral devices set for the takeover target terminal 3, without resetting the connections with the peripheral devices.

The server 1 according to an embodiment can execute a holding process for pausing an existing transaction process at the takeover processing terminal 2, and then permit the resumption of the held transaction at the takeover processing terminal 2 after the transaction of the takeover target terminal 3 is completed by the takeover processing terminal 2.

The server 1 according to an embodiment can output, to the takeover target terminal 3, the peripheral device information associated with the takeover target terminal 3. Therefore, when the abnormal state of the takeover target terminal 3 is eliminated, the server 1 outputs updated peripheral device information (after the takeover process) to the takeover target terminal 3, and thus the settings can be changed such that the takeover target terminal 3 is not redundantly connected to a peripheral device now connected to (used by) the takeover processing terminal 2. Accordingly, the system can appropriately perform a connection setting with the peripheral devices after the abnormality of the takeover target terminal 3 is eliminated.

The above-described embodiment may be applied not only to a device but also to a method executed by a device. The above-described embodiment may be applied to a program capable of causing a computer to execute described functions of an embodiment.

Such a program may be transferred by being stored in a device, or may be transferred otherwise. In the latter case, the program may be transferred via a network, or recorded in a recording medium. The recording medium can be a non-transitory tangible medium that is a computer-readable medium. The recording medium may be any medium such as a CD-ROM or a memory card as long as the medium can store a program and can be read by a computer, and a format thereof is not limited.

While certain embodiments have been described, these embodiments have been presented as examples, and are not intended to limit the scope of the present disclosure. Indeed, the novel embodiments described herein may be embodied in a variety of other forms. Furthermore, various omissions, substitutions and changes in the form of the embodiments described herein may be made without departing from the spirit of the present disclosure. The embodiments and the modification thereof are included in the scope and the spirit of the present disclosure and are also included in the present disclosure described in the scope of claims and an equivalent scope thereof.

## Claims

1. A point-of-sale system, comprising:
a server connectable to a plurality of point-of-sale terminals, the server including:
a storage unit configured to store transaction information of the plurality of point-of-sale terminals; and
a processor configured to:
acquire, from a first terminal in the plurality of point-of-sale terminals, a designation of a second terminal in the plurality of point-of-sale terminals, and
output transaction information of the second terminal from the storage unit to the first terminal to permit the first terminal to continue a transaction started by the second terminal.

2. The point-of-sale system according to claim 1, wherein the processor is further configured to output peripheral connection settings for the second terminal to the first terminal to permit the first terminal to use at least one peripheral device connected to the second terminal.

3. The point-of-sale system according to claim 1 or 2, further comprising:
the first terminal, wherein
the first terminal includes:
a display control unit configured to cause a display unit to display transaction information from the server for takeover candidates from the plurality of point-of-sale terminals, and
an output unit configured to output the designation of the second terminal from among the displayed takeover candidates.

4. The point-of-sale system according to claim 3, wherein displayed transaction information for the takeover candidates includes current status information.

5. The point-of-sale system according to any one of claims 1 to 4, wherein the processor of the server is further configured to output peripheral device setting information based on the designation of the second terminal.

6. The point-of-sale system according to any one of claims 1 to 5, further comprising:
the first terminal includes:
an acquisition unit configured to receive the peripheral device setting information from the server, and
a setting unit configured to connect the first terminal to a peripheral device based on the received peripheral device setting information.

7. The point-of-sale system according to any one of claims 1 to 6, wherein the processor is further configured to:
execute a holding process for pausing a first transaction at the first terminal once the designation of the second terminal is made, and
cause the first terminal to resume the first transaction after the transaction started on the second terminal is completed.

8. The point-of-sale system according to any one of claims 1 to 7, wherein the processor is further configured to output, to the second terminal, peripheral device information associated with the second terminal stored in the storage unit.

9. The point-of-sale system according to any one of claims 1 to 8, further comprising a second terminal in the plurality of point-of-sale terminals.

10. A point-of-sale terminal for a point-of-sale system, the terminal comprising:
a communication interface connectable to a server;
a display screen for display information to an operator; and
a processor configured to:
receive information regarding candidate terminals for a takeover operation from the server;
display information regarding the candidate terminals on the display screen;
receive a selection of a candidate terminal from the candidate terminals for the takeover operation;
acquire transaction information regarding a transaction at the selected candidate terminal; and
perform transaction processing for completing the transaction.

11. The point-of-sale terminal according to claim 10, further comprising:
a peripheral connection interface connectable to at least one peripheral device, wherein
the processor is further configured to receive peripheral connection settings for the selected candidate terminal from the server and use the peripheral connection settings to connect to a peripheral device via the peripheral connection interface without resetting the peripheral device.

12. The point-of-sale terminal according to claim 11, wherein the peripheral device is a printer.

13. The point-of-sale terminal according to claim 11 or 12, wherein the processor is further configured to pause an on-going transaction at the point-of-sale terminal.

14. The point-of-sale terminal according to claim 13, wherein the processor is further configured to resume the on-going transaction after performing the transaction processing for completing the transaction of the selected candidate terminal.
